# EUROPEAN PATENT APPLICATION

(11) **EP 3 981 605 A2**
(43) Date of publication of application: **13.04.2022**
(21) Application number: 21187311.2
(22) Date of filing: 22.07.2021
(51) Int. Cl.: B41M 5/00, B41M 5/50

(54) **PRINTING METHOD, PRINTING APPARATUS, AND PRINTED MATTER**

(30) Priority: 18.08.2020 JP 2020137841; 04.06.2021 JP 2021094001
(71) Applicant: Ricoh Company, Ltd., Tokyo 143-8555 (JP)
(72) Inventor: YAMAMOTO, Sei, Tokyo, 143-8555 (JP); NAKAGAWA, Tomohiro, Tokyo, 143-8555 (JP); UMEMURA, Kazuhiko, Tokyo, 143-8555 (JP); KOYANO, Masayuki, Tokyo, 143-8555 (JP); HIROKAWA, Yuya, Tokyo, 143-8555 (JP); SAIGA, Takuya, Tokyo, 143-8555 (JP); HAGIWARA, Hiroki, Tokyo, 143-8555 (JP)
(74) Representative: Fairbairn, Angus Chisholm

(57) **Abstract**

A printing method includes: a processing fluid applying step of applying a processing fluid containing silica and a multivalent metal salt to a print medium (1); and an ink applying step of applying an ink containing a coloring material and water to the print medium (1). The print medium (1) has a Cobb water absorption of 20 g/m² or greater but 75 g/m² or less when contacted with water for 120 seconds. The Cobb water absorption is stipulated by JIS-P8140.

## Description

### BACKGROUND

### Technical Field

The present disclosure relates to a printing method, a printing apparatus, and a printed matter.

### Description of the Related Art

In recent years, techniques for inkjet printers have been being developed not only for home use, but also for inkjet image formation over packaging materials for, for example, foods, beverages, and daily necessities. Examples of the print media in the packaging use include cardboard.

The methods for cardboard printing are roughly classified into the method of recording an image over the cardboard base paper (front liner paper) with print inks and then pasting the base paper with a corrugating medium and back liner paper using a corrugator to produce a piece of cardboard (pre-printing method), and the method of recording an image over the front liner paper of an already pasted piece of cardboard with print inks (post-printing method).

For example, offset printing, flexography, and gravure printing have been hitherto used for cardboard printing. All of these methods print images over print media by bringing plates or blankets into contact with the print media and transferring inks onto the print media under printing pressures. Therefore, the post-printing method tends to generate density unevenness due to the influence of the bosses and recesses (flute corrugations) of the surface of the cardboard. Particularly, post-printing over thick cardboard has been difficult. On the other hand, the pre-printing method can overcome the printing-related problem, but has a problem that it takes a long time for the pasting step after the printing and cannot move to the box making step immediately after the printing, and cannot meet short delivery deadlines.

As compared, the inkjet printing is a method of recording images over print media in a contactless manner. Therefore, the inkjet printing can easily post-print images over thick cardboard, move to the box making step immediately after the printing, and meet short delivery deadlines. Hence, the cardboard printing has an increasing demand for the inkjet printing.

However, in the cardboard printing, existing water-based inkjet printing methods have quality problems such as low density and bleed, and cannot sufficiently satisfy consumers' quality requirements such as high density and high resolution.

A piece of cardboard has cardboard base paper (liner paper) on a print surface thereof. Typical cardboard base paper has no or an insufficient ink receiving layer, and is characterized by being porous compared with, for example, coat paper for offset printing. Particularly, water-based inkjet inks, which are low-viscosity print inks, easily permeate and diffuse in the cardboard base paper, and have a problem that they cannot express a sufficient print density and tend to bleed and blur the images.

Hence, liner paper including an ink receiving layer is proposed (for example, see Japanese Unexamined Patent Application Publication No. 2006-150694).

A method of applying a processing fluid containing a multivalent metal salt in order to improve image qualities and durabilities of inkjet inks has also been proposed (for example, see Japanese Translation of PCT International Application Publication No. JP-T-2013-538132).

### SUMMARY

The present disclosure has an object to provide a printing method that can prevent ink bleed over a porous print medium and realize a high image density.

According to one embodiment of the present disclosure, a printing method includes a processing fluid applying step of applying a processing fluid containing silica and a multivalent metal salt to a print medium, and an ink applying step of applying an ink containing a coloring material and water to the print medium, wherein the print medium has a Cobb water absorption of 20 g/m² or greater but 75 g/m² or less when contacted with water for 120 seconds, where the Cobb water absorption is stipulated by JIS-P8140.

The present disclosure can provide a printing method that can prevent ink bleed over a porous print medium and realize a high image density.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a schematic view illustrating an example of a method for printing over cardboard by a pre-printing method;
FIG. 2 is a schematic view illustrating an example of a method for printing over cardboard by a post-printing method; and
FIG. 3 is a schematic view illustrating an example of a printing apparatus according to an embodiment of the present disclosure, used in a printing method according to an embodiment of the present disclosure.

The accompanying drawings are intended to depict embodiments of the present invention and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

### (Printing method and printing apparatus)

A printing method of the present disclosure includes a processing fluid applying step of applying a processing fluid containing silica and a multivalent metal salt to a print medium, and an ink applying step of applying an ink containing a coloring material and water to the print medium, wherein the print medium has a Cobb water absorption of 20 g/m² or greater but 75 g/m² or less when contacted with water for 120 seconds, where the Cobb water absorption is stipulated by Japanese Industrial Standards (JIS) -P8140. The printing method preferably includes a drying step and further includes other steps as needed.

A printing apparatus of the present disclosure includes a processing fluid applying unit configured to apply a processing fluid containing silica and a multivalent metal salt to a print medium and an ink applying unit configured to apply an ink containing a coloring material and water to the print medium, wherein the print medium has a Cobb water absorption of 20 g/m² or greater but 75 g/m² or less when contacted with water for 120 seconds, where the Cobb water absorption is stipulated by JIS-P8140. The printing apparatus preferably includes a drying unit and further includes other units as needed.

The printing method of the present disclosure can be suitably performed by the printing apparatus of the present disclosure. The processing fluid applying step can be performed by the processing fluid applying unit. The ink applying step can be performed by the ink applying unit. The drying step can be performed by the drying unit. The other steps can be performed by the other units.

The existing technique described in Japanese Unexamined Patent Application Publication No. 2006-150694 proposes cardboard base paper (liner paper) including an ink receiving layer, but does not have a sufficient versatility because the technique cannot use various kinds of cardboard distributed in the market.

The existing technique described in Japanese Translation of PCT International Application Publication No. JP-T-2013-538132 proposes a method of applying a processing fluid containing a multivalent metal salt in order to improve image qualities and durabilities of inkjet inks. However, when cardboard base paper (liner paper) is used as the print medium, there is a problem that the technique cannot sufficiently realize dense color development and bleed resistance.

According to the present disclosure, in which a processing fluid containing silica and a multivalent metal salt is applied to a print medium having a Cobb water absorption, stipulated by JIS-P8140, of 20 g/m² or greater but 75 g/m² or less when contacted with water for 120 seconds, it is possible to obtain a printed matter excellent in dense color development and bleed resistance because the multivalent metal salt serving as a flocculant is kept remaining in a surface layer by the silica and can prevent sedimentation of the ink.

Also when cardboard base paper (liner paper) is used as a print medium, it is possible to obtain a printed matter excellent in dense color development and bleed resistance.

### <Processing fluid applying step and processing fluid applying unit>

The processing fluid applying step is a step of applying a processing fluid containing silica and a multivalent metal salt to a print medium having a Cobb water absorption of 20 g/m² or greater but 75 g/m² or less when contacted with water for 120 seconds, where the Cobb water absorption is stipulated by JIS-P8140. The processing fluid applying step is performed by the processing fluid applying unit.

### «Processing fluid»

The processing fluid is applied to a print medium before an ink is applied to the print medium. The processing fluid may be referred to as "pre-processing fluid" or "precoat fluid".

The processing fluid contains silica and a multivalent metal salt, preferably contains a resin, and further contains other components as needed.

The viscosity of the processing fluid at 25 degrees C of may be adjusted in a range of 5 mPa·s or higher but 1,000 mPa·s or lower depending on the applying manner. This viscosity can be measured with, for example, a rotary viscometer (available from Toki Sangyo Co., Ltd., RE-80L). As the measuring conditions, the viscosity can be measured at 25 degrees C with a standard cone rotor (1°34'×R24) with a sample liquid amount of 1.2 mL at a number of rotations of 50 rpm for three minutes. It is possible that the viscosity of the processing fluid at 25 degrees C be 5 mPa·s or higher but 200 mPa·s or lower, because the processing fluid can be applied to a print medium more uniformly, and as a result, an ink can be applied to the print medium more uniformly and can form an image without unevenness.

The method for applying the processing fluid is not particularly limited and may be appropriately selected depending on the intended purpose. Examples of the method include, but are not limited to, an inkjet method, a blade coating method, a gravure coating method, a gravure offset coating method, a bar coating method, a roll coating method, a knife coating method, an air knife coating method, a comma coating method, a U-comma coating method, an AKKU coating method, a smoothing coating method, a microgravure coating method, a reverse roll coating method, a four-roll coating method, a five-roll coating method, a dip coating method, a curtain coating method, a slide coating method, and a die coating method. The applying method can be appropriately selected depending on, for example, the material and the thickness of the print medium.

The amount of the processing fluid to be applied to a print medium, expressed as the amount of a solid component applied, is preferably 2 g/m² or greater but 30 g/m² or less and more preferably 5 g/m² or greater but 20 g/m² or less.

### -Silica-

As the silica, for example, gas phase silica, wet silica synthesized by, for example, a precipitation method and a sol-gel method, and colloidal silica can be used.

In the present disclosure, a silica layer that is formed near the surface layer of a print medium by application of the processing fluid containing silica to the print medium can suppress density degradation and bleed that may occur due to a permeated, absorbed ink, making it possible to obtain a printed matter having a high quality.

Silica has a particulate shape and needs at least to have a particle diameter that enables the processing fluid to be applied to a print medium. Silica having a number average primary particle diameter of 5 nm or greater but 40 nm or less and a BET specific surface area of 30 m²/g or greater but 350 m²/g or less can be suitably used. Silica having a BET specific surface area of 35 m²/g or greater but 155 m²/g or less is particularly preferable. The BET specific surface area of silica is preferably 30 m²/g or greater because the transparency of the processing fluid can be increased and changes of the appearance of cardboard can be avoided. The BET specific surface area of silica is preferably 350 m²/g or less because the fixability of silica on the surface layer of cardboard is excellent and a high ink density can be obtained.

The BET specific surface area of silica is a value measured by the Brunauer, Emmett, and Teller method (BET method), and can be measured by a typical gas adsorption method.

The number average primary particle diameter of silica can be measured by, for example, observation with a transmission electron microscope.

Specific examples of silica include, but are not limited to, AEROSIL50, 90G, 130, 200, 200V, 200CF, 200FAD, 300, 300CF, R972, R976, and W7520 (available from Nippon Aerosil Co., Ltd.) as gas phase silica, SYLOJET series (available from Grace Davison Chemicals India Pvt. Ltd.) as wet silica, and SNOWTEX series (available from Nissan Chemical Corporation) as colloidal silica. One of these kinds of silica may be used alone or two or more of these kinds of silica may be used in combination.

Silica is not limited by whether it is surface-treated or not, and hydrophilic silica, and hydrophobic silica treated with, for example, dimethyl cyclosilane can be used. When using hydrophobic silica, there is a need for previously dispersing silica in an organic solvent such as 1,2-propanediol before use, and there may be constrains on the prescription. Therefore, it is more preferable to use hydrophilic silica having an excellent water dispersibility.

The amount of silica to be applied to a print medium, expressed as the amount of silica attached on the print medium, is preferably 0.02 g/m² or greater but 0.8 g/m² or less and more preferably 0.04 g/m² or greater but 0.6 g/m² or less. The amount of silica attached is preferably 0.02 g/m² or greater because a high ink density and a bleed preventing effect can be obtained. The amount of silica attached is preferably 0.8 g/m² or less because changes of the appearance of cardboard serving as a print medium can be avoided.

The proportion of silica in the processing fluid is not particularly limited so long as the amount of silica attached on a print medium satisfies the range described above and silica can be suitably applied to the surface of a print medium. The proportion of silica in the processing fluid is preferably 0.3% by mass or greater but 6% by mass or less and more preferably 0.4% by mass or greater but 5% by mass or less. The concentration of silica is preferably 0.3% by mass or greater because a high ink density and a bleed preventing effect can be obtained. The concentration of silica is preferably 6% by mass or less because the processing fluid can be suppressed from viscosity rise and can be applied suitably.

### -Multivalent metal salt-

The multivalent metal salt has a function of destabilizing dispersion of a coloring material in an ink, and can quickly coagulate a pigment contained in an ink after an ink droplet lands, making it possible to suppress color bleed and improve color developability.

The cation of the multivalent metal salt is not particularly limited and may be appropriately selected depending on the intended purpose. Examples of the cation of the multivalent metal salt include, but are not limited to, the ions of aluminum (Al(III)), calcium (Ca(II)), magnesium (Mg(II)), copper (Cu(II)), iron (Fe(II) or Fe(III)), zinc (Zn(II)), tin (Sn(II) or Sn(IV)), strontium (Sr(II)), nickel (Ni(II)), cobalt (Co(II)), barium (Ba(II)), lead (Pb(II)), zirconium (Zr(IV)), titanium (Ti(IV)), antimony (Sb(III)), bismuth (Bi(III)), tantalum (Ta(V)), arsenic (As(III)), cerium (Ce(III)), lanthanum (La(III)), yttrium (Y(III)), mercury (Hg(II)), and beryllium (Be(II)). One of these cations may be used alone or two or more of these cations may be used in combination. Among these cations, the cations of calcium (Ca(II)) and magnesium (Mg(II)) are preferable.

The anion of the multivalent metal salt is not particularly limited and may be appropriately selected depending on the intended purpose. Examples of the anion of the multivalent metal salt include, but are not limited to, the ions of halogen elements such as fluorine (F), chlorine (Cl), bromine (Br), and iodine (I); nitrate ion (NO₃⁻) and sulfate ion (SO₄²⁻); the ions of organic carboxylic acids such as formic acid, acetic acid, lactic acid, malonic acid, oxalic acid, maleic acid, and benzoic acid; the ions of organic sulfonic acids such as benzene sulfonic acid, naphthol sulfonic acid, and alkylbenzene sulfonic acid; and thiocyanate ion (SCN, thiosulfate ion S₂O₃²⁻), phosphate ion (PO₄³⁻), and nitrite ion (NO²⁻). One of these anions may be used alone or two or more of these anions may be used in combination. Among these anions, chloride ion (Cl⁻), sulfate ion (SO₄²⁻), acetate ion, and nitrate ion (NO₃⁻) are preferable in terms of costs and safety.

The multivalent metal salt is not particularly limited and may be appropriately selected depending on the intended purpose. Examples of the multivalent metal salt include, but are not limited to, aluminum chloride, calcium chloride, nickel chloride, potassium acetate, sodium acetate, calcium acetate, magnesium acetate, aluminum nitrate, magnesium nitrate, magnesium chloride, calcium nitrate, magnesium hydroxide, aluminum sulfate, magnesium sulfate, and ammonium alum. More specific examples of the multivalent metal salt include, but are not limited to, calcium acetate monohydrate, calcium nitrate tetrahydrate, calcium chloride hexahydrate, magnesium acetate tetrahydrate, magnesium sulfate (anhydrous), aluminum nitrate nonahydrate, and nickel chloride hexahydrate. One of these multivalent metal salts may be used alone or two or more of these multivalent metal salts may be used in combination. Among these multivalent metal salts, calcium acetate monohydrate, calcium nitrate tetrahydrate, calcium chloride hexahydrate, magnesium acetate tetrahydrate, and magnesium sulfate (anhydrous) are preferable.

The proportion of the multivalent metal salt is preferably 1% by mass or greater but 25% by mass or less, more preferably 3% by mass or greater but 20% by mass or less, and yet more preferably 5% by mass or greater but 12% by mass or less relative to the total amount of the processing fluid. The proportion of the multivalent metal salt is preferably 1% by mass or greater because color bleed can be suppressed suitably. The proportion of the multivalent metal salt is preferably 25% by mass or less because the multivalent metal salt has a high stability during storage and can be suppressed from quality defects such as precipitation.

### -Resin-

The processing fluid may contain a resin. The kind of the resin is not particularly limited and any resin can be used. However, at least one selected from acrylic resins, polyolefin resins, polyvinyl acetate resins, polyvinyl chloride resins, urethane resins, and copolymers of these resins is preferable because a strong adhesiveness with various kinds of print media can be obtained.

When adding the resin in the processing fluid, it is possible to add the resin in the form of a dispersion liquid obtained by dispersing resin particles in water. It is also possible to use a resin commercially available as a resin emulsion.

The volume average particle diameter of the resin particles is not particularly limited, may be appropriately selected depending on the intended purpose, and is preferably 10 nm or greater but 1,000 nm or less, more preferably 10 nm or greater but 200 nm or less, and particularly preferably 10 nm or greater but 100 nm or less in terms of obtaining a suitable dispersibility, fixability, and a high image hardness.

The volume average particle diameter can be measured with, for example, a particle size analyzer (NANOTRAC WAVE-UT151, available from MicrotracBEL Corp).

Considering compatibility and stability when the resin is mixed with the multivalent metal salt, the acid value of the resin is preferably 20 mgKOH/g or less.

The resin may have any glass transition temperature (Tg) so long as the resin can maintain adhesiveness with a print medium and a drying property. For example, a resin having a glass transition temperature in the range of -25 degrees C or higher but 70 degrees C or lower can be suitably used. The Tg of the resin is preferably -25 degrees C or higher in terms of suppressing stickiness of the surface of a print medium and blocking between overlaid print media. The Tg of the resin is preferably 70 degrees C or lower in order to maintain adhesiveness of the resin and avoid cracking or peeling during a bending process in the box making step. Particularly when cardboard is used as a print medium, preferable effects can be obtained.

The proportion of the resin is preferably 30% by mass or less and more preferably 0.5% by mass or greater but 20% by mass or less relative to the total amount of the processing fluid. The proportion means the mass percentage of a resin solid component contained in the processing fluid. The proportion of the resin of 30% by mass or less is preferable because the resin can be prevented from growing extremely thick after the processing fluid is applied, making it possible to suppress occurrence of blocking and changes of the appearance of cardboard and to make the multivalent metal salt work sufficiently effectively.

### -Other components-

Examples of the other components include, but are not limited to, an organic solvent, water, a surfactant, a defoaming agent, a preservative and a fungicide, a corrosion inhibitor, and a pH regulator.

### --Organic solvent--

There is no specific limitation on the type of the organic solvent used in the present disclosure. For example, water-soluble organic solvents are suitable. Specific examples thereof include, but are not limited to, polyols, ethers such as polyol alkylethers and polyol arylethers, nitrogen-containing heterocyclic compounds, amides, amines, and sulfur-containing compounds.

Specific examples of the water-soluble organic solvents include, but are not limited to, polyols such as ethylene glycol, diethylene glycol, 1,2-propanediol, 1,3-propanediol, 1,2-butanediol, 1,3-butanediol, 1,4-butanediol, 2,3-butanediol, 3-methyl-1,3-butane diol, triethylene glycol, polyethylene glycol, polypropylene glycol, 1,2-pentanediol, 1,3-pentanediol, 1,4-pentanediol, 2,4-pentanediol, 1,5-pentanediol, 1,2-hexanediol, 1,6-hexanediol, 1,3-hexanediol, 2,5-hexanediol, 1,5-hexanediol, glycerin, 1,2,6-hexanetriol, 2-ethyl-1,3-hexanediol, ethyl-1,2,4-butane triol, 1,2,3-butanetriol, 2,2,4-trimethyl-1,3-pentanediol, and 3-methyl-1,3,5-pentanetriol; polyol alkylethers such as ethylene glycol monoethylether, ethylene glycol monobutylether, diethylene glycol monomethylether, diethylene glycol monoethylether, diethylene glycol monobutylether, tetraethylene glycol monomethylether, and propylene glycol monoethylether; polyol arylethers such as ethylene glycol monophenylether and ethylene glycol monobenzylether; nitrogen-containing heterocyclic compounds such as 2-pyrolidone, N-methyl-2-pyrolidone, N-hydroxyethyl-2-pyrolidone, 1,3-dimethyl-2-imidazolidinone, ε-caprolactam, and γ-butyrolactone; amides such as formamide, N-methylformamide, N,N-dimethylformamide, 3-methoxy-N,N-dimethyl propionamide, and 3-butoxy-N,N-dimethyl propionamide; amines such as monoethanolamine, diethanolamine, and triethylamine; sulfur-containing compounds such as dimethyl sulfoxide, sulfolane, and thiodiethanol; propylene carbonate, and ethylene carbonate.

Since the water-soluble organic solvent serves as a humectant and also imparts a good drying property, it is preferable to use an organic solvent having a boiling point of 250 degrees C or lower.

The proportion of the organic solvent in the processing fluid is not particularly limited, may be appropriately selected depending on the intended purpose, and is preferably 5% by mass or greater but 90% by mass or less and more preferably 10% by mass or greater but 70% by mass or less, considering, for example, the aptitude for application to a print medium, uniform dispersibility, and a drying property.

### --Water--

The water is not particularly limited and may be appropriately selected depending on the intended purpose. Examples of the water include, but are not limited to, pure water such as ion-exchanged water, ultrafiltrated water, reverse osmotic water, and distilled water, and ultrapure water. One of these kinds of water may be used alone or two or more of these kinds of water may be used in combination. The content of the water in the processing fluid is not particularly limited, and the water needs at least to be contained in an amount enough for the multivalent metal salt not to precipitate during storage at normal temperature.

### --Surfactant--

The surfactant has an effect of reducing the surface tension of the processing fluid and improving the wettability of the processing fluid on various kinds of print media, to enable the processing fluid to be applied uniformly and enable the silica and the multivalent metal salt contained in the processing fluid to be distributed uniformly over the print media.

Examples of the surfactant are silicone-based surfactants, fluorosurfactants, amphoteric surfactants, nonionic surfactants, anionic surfactants, etc.

The silicone-based surfactant has no specific limit and can be suitably selected to suit to a particular application. Of these, preferred are silicone-based surfactants which are not decomposed even in a high pH environment. Specific examples thereof include, but are not limited to, side-chain-modified polydimethylsiloxane, both end-modified polydimethylsiloxane, one-end-modified polydimethylsiloxane, and side-chain-both-end-modified polydimethylsiloxane. A silicone-based surfactant having a polyoxyethylene group or a polyoxyethylene polyoxypropylene group as a modifying group is particularly preferable because such an agent demonstrates good characteristics as an aqueous surfactant. It is possible to use a polyether-modified silicone-based surfactant as the silicone-based surfactant. A specific example thereof is a compound in which a polyalkylene oxide structure is introduced into the side chain of the Si site of dimethyl siloxane.

Specific examples of the fluoro surfactants include, but are not limited to, perfluoroalkyl sulfonic acid compounds, perfluoroalkyl carboxylic acid compounds, perfluoroalkyl phosphoric acid ester compounds, adducts of perfluoroalkyl ethylene oxide, and polyoxyalkylene ether polymer compounds having a perfluoroalkyl ether group in its side chain. These are particularly preferable because they do not foam easily. Specific examples of the perfluoroalkyl sulfonic acid compounds include, but are not limited to, perfluoroalkyl sulfonic acid and salts of perfluoroalkyl sulfonic acid. Specific examples of the perfluoroalkyl carboxylic acid compounds include, but are not limited to, perfluoroalkyl carboxylic acid and salts of perfluoroalkyl carboxylic acid. Specific examples of the polyoxyalkylene ether polymer compounds having a perfluoroalkyl ether group in its side chain include, but are not limited to, sulfuric acid ester salts of polyoxyalkylene ether polymer having a perfluoroalkyl ether group in its side chain and salts of polyoxyalkylene ether polymers having a perfluoroalkyl ether group in its side chain. Counter ions of salts in these fluorine-based surfactants are, for example, Li, Na, K, NH₄, NH₃CH₂CH₂OH, NH₂(CH₂CH₂OH)₂, and NH(CH₂CH₂OH)₃.

Specific examples of the amphoteric surfactants include, but are not limited to, lauryl aminopropionic acid salts, lauryl dimethyl betaine, stearyl dimethyl betaine, and lauryl dihydroxy ethyl betaine.

Specific examples of the nonionic surfactants include, but are not limited to, polyoxyethylene alkyl phenyl ethers, polyoxyethylene alkyl esters, polyoxyethylene alkyl amines, polyoxyethylene alkyl amides, polyoxyethylene propylene block polymers, sorbitan aliphatic acid esters, polyoxyethylene sorbitan aliphatic acid esters, and adducts of acetylene alcohol with ethylene oxides, etc.

Specific examples of the anionic surfactants include, but are not limited to, polyoxyethylene alkyl ether acetates, dodecyl benzene sulfonates, laurates, and polyoxyethylene alkyl ether sulfates.

These can be used alone or in combination.

The silicone-based surfactants have no particular limit and can be suitably selected to suit to a particular application. Specific examples thereof include, but are not limited to, side-chain-modified polydimethyl siloxane, both end-modified polydimethylsiloxane, one-end-modified polydimethylsiloxane, and side-chain-both-end-modified polydimethylsiloxane. In particular, a polyether-modified silicone-based surfactant having a polyoxyethylene group or a polyoxyethylene polyoxypropylene group as a modifying group is particularly preferable because such a surfactant demonstrates good characteristics as an aqueous surfactant.

Any suitably synthesized surfactant and any product thereof available on the market is suitable. Products available on the market are obtained from Byk Chemie Japan Co., Ltd., Shin-Etsu Chemical Co., Ltd., Dow Corning Toray Silicone Co., Ltd., NIHON EMULSION Co., Ltd., Kyoeisha Chemical Co., Ltd., etc.

The polyether-modified silicone-containing surfactant has no particular limit and can be suitably selected to suit to a particular application. Examples thereof include, but are not limited to, a compound in which the polyalkylene oxide structure represented by the following General formula S-1 is introduced into the side chain of the Si site of dimethyl polysiloxane.

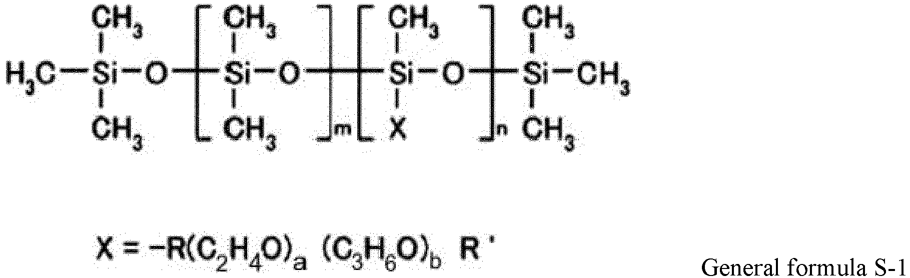

In the General formula S-1, "m", "n", "a", and "b" each, respectively represent integers, R represents an alkylene group, and R' represents an alkyl group.

Products available on the market may be used as the polyether-modified silicone-based surfactants. Specific examples of polyether-modified silicone-based surfactants include, but are not limited to, KF-618, KF-642, and KF-643 (all manufactured by Shin-Etsu Chemical Co., Ltd.), EMALEX-SS-5602 and SS-1906EX (both manufactured by NIHON EMULSION Co., Ltd.), FZ-2105, FZ-2118, FZ-2154, FZ-2161, FZ-2162, FZ-2163, and FZ-2164 (all manufactured by Dow Corning Toray Silicone Co., Ltd.), BYK-33 and BYK-387 (both manufactured by Byk Chemie Japan Co., Ltd.), and TSF4440, TSF4452, and TSF4453 (all manufactured by Toshiba Silicone Co., Ltd.).

A fluorosurfactant in which the number of carbon atoms replaced with fluorine atoms is from 2 to 16 and more preferably from 4 through 16 is preferable.

Specific examples of the fluorosurfactants include, but are not limited to, perfluoroalkyl phosphoric acid ester compounds, adducts of perfluoroalkyl ethylene oxide, and polyoxyalkylene ether polymer compounds having a perfluoroalkyl ether group in its side chain.

Of these, polyoxyalkylene ether polymer compounds having a perfluoroalkyl ether group in its side chain are preferable because they do not foam easily and the fluorosurfactant represented by the following General formula F-1 or General formula F-2 is more preferable.

**CF₃CF₂(CF₂CF₂)ₘ -CH₂CH₂O(CH₂CH₂O)ₙ H** General formula F-1

In General formula F-1, "m" is preferably 0 or an integer of from 1 to 10 and "n" is preferably 0 or an integer of from 1 to 40 in order to provide water solubility.

CₙF₂ₙ₊-CH₂CH(OH)CH₂-O-(CH₂CH₂O)ₐ-Y General formula F-1

In General formula F-2, Y represents H, CₘF₂ₘ₊₁, where "m" is an integer of from 1 to 6, CH₂CH(OH)CH₂-CₘF₂ₘ₊₁, where m represents an integer of from 4 to 6, or CₚF₂ₚ₊₁, where p represents an integer of from 1 to 19. "n" represents an integer of from 1 to 6. "a" represents an integer of from 4 to 14.

Products available on the market may be used as the fluorosurfactant. Specific examples of the products available on the market include, but are not limited to, SURFLON S-111, SURFLON S-112, SURFLON S-113, SURFLON S-121, SURFLON S-131, SURFLON S-132, SURFLON S-141, and SURFLON S-145 (all manufactured by ASAHI GLASS CO., LTD.); FLUORAD FC-93, FC-95, FC-98, FC-129, FC-135, FC-170C, FC-430, and FC-431 (all manufactured by SUMITOMO 3M); MEGAFAC F-470, F-1405, and F-474 (all manufactured by DIC CORPORATION); ZONYL^{™} TBS, FSP, FSA, FSN-100, FSN, FSO-100, FSO, FS-300, UR, CAPSTONE^{®} FS-30, FS-31, FS-3100, FS-34, and FS-35 (all manufactured by The Chemours Company); FT-110, FT-250, FT-251, FT-400S, FT-150, and FT-400SW (all manufactured by NEOS COMPANY LIMITED); POLYFOX PF-136A, PF-156A, PF-151N, PF-154, and PF-159 (manufactured by OMNOVA SOLUTIONS INC.), and UNIDYNE DSN-403N (manufactured by DAIKIN INDUSTRIES). Of these, FS-3100, FS-34, and FS-300 (all manufactured by The Chemours Company), FT-110, FT-250, FT-251, FT-400S, FT-150, and FT-400SW (all manufactured by NEOS COMPANY LIMITED), POLYFOX PF-151N (manufactured by OMNOVA SOLUTIONS INC.), and UNIDYNE DSN-403N (manufactured by DAIKIN INDUSTRIES) are particularly preferable in terms of good printing quality, coloring in particular, and improvement on permeation, wettability, and uniform dyeing property to paper.

The proportion of the surfactant is not particularly limited and can be suitably selected to suit to a particular application. It is preferably from 0.001 to 5 percent by mass and more preferably from 0.05 to 5 percent by mass in terms of excellent wettability and discharging stability and improvement on image quality.

### --Defoaming Agent--

The defoaming agent has no particular limit. For example, silicone -based defoaming agents, polyether-based defoaming agents, and aliphatic acid ester-based defoaming agents are suitable. These can be used alone or in combination. Of these, silicone-based defoaming agents are preferable to easily break foams.

### --Preservatives and Fungicides--

The preservatives and fungicides are not particularly limited. A specific example is 1,2-benzisothiazolin-3-on.

### --Corrosion inhibitor--

The corrosion inhibitor has no particular limit. Examples thereof are acid sulfite and sodium thiosulfate.

### --pH regulator--

The processing fluid of the present disclosure may contain a pH regulator. The pH regulator is not particularly limited, and examples of the pH regulator include, but are not limited to, amines such as diethanol amine and triethanol amine. The pH of the processing fluid is preferably from 7 through 12 and more preferably from 8 through 11 in terms of preventing corrosion of any metallic member that may contact the processing fluid.

### «Print medium»

By application of the processing fluid of the present disclosure, a print medium having a Cobb water absorption, stipulated by JIS-P8140, of 20 g/m² or greater but 75 g/m² or less when contacted with water for 120 seconds can produce an ink printed matter excellent in dense color development and bleed resistance. Also when a print medium is cardboard (liner paper), the print medium can suitably produce an ink printed matter excellent in dense color development and bleed resistance.

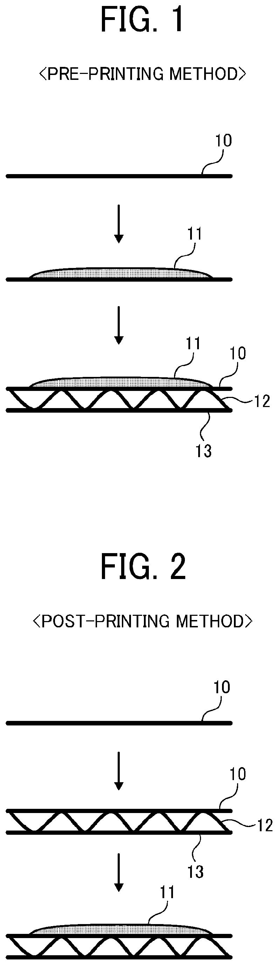

Here, the methods for cardboard printing are roughly classified into a method of recording an image 11 over cardboard base paper (front liner paper 10) with print inks and then pasting the base paper with a corrugating medium 12 and back liner paper 13 using a corrugator to produce a piece of cardboard (pre-printing method) as illustrated in FIG. 1, and a method of recording an image 11 over the front liner paper 10 of an already pasted piece of cardboard with print inks (post-printing method) as illustrated in FIG. 2. The present disclosure can be suitably used for both of these methods.

The pre-printing method is suitably used because front liner paper can be wound in a roll form, making it possible to use continuous paper as a print medium and to use a printer for continuous paper for printing. The post-printing method is suitably used because the print medium can be stored with ease, and after printing, the printed matter can be directly delivered to the customer.

Cardboard is basically formed of three pieces of paper, namely, front liner paper, a corrugating medium, and back liner paper. It is possible to adjust the strength of cardboard by changing the materials of the front liner paper, the corrugating medium, and the back liner paper. Corrugating media have different flute height standards. Basic standards are 5 mm and 3 mm. For example, a five-layered "double wall corrugated fiberboard" including corrugating media in a plurality of layers can also be used as a print medium in the present disclosure.

According to the present disclosure, it is possible to suitably print images over front liner paper both by the pre-printing method and by the post-printing method. Double-sided cardboard printing including printing over the back liner paper is also available.

Examples of the fiber material used for producing liner paper include, but are not limited to, bleached kraft pulp of hardwood or softwood, unbleached kraft pulp of hardwood or softwood, and sulfite pulp of hardwood or softwood. Moreover, for example, virgin pulp such as pulp, ground pulp, chemiground pulp, and semi-chemical pulp that are chemically treated with, for example, chemically treated pulp, kenaf, hemp, and reed, and used paper of, for example, cardboard, newspaper, magazines, and flyers can also be used.

The cardboard base paper (liner paper) has a Cobb water absorption, stipulated by JIS-P8140, of 20 g/m² or greater but 75 g/m² or less, preferably 23 g/m² or greater but 69 g/m² or less, and more preferably 35 g/m² or greater but 60 g/m² or less when contacted with water for 120 seconds. When the Cobb water absorption of the cardboard base paper is 20 g/m² or greater, inks can spread over the cardboard base paper suitably, and are not likely to be repelled on the surface. When the Cobb water absorption of the cardboard base paper is 75 g/m² or less, inks can fix on the cardboard base paper well, and can prevent occurrence of bleed.

The Cobb water absorption is a degree of Cobb water absorption for a water contact time of 120 seconds, as stipulated by JIS-P8140. For example, cardboard base paper (test piece) having a contact area of 100 cm² with water is set in a cylinder, water (100 mL) is poured into the cylinder in a state that the base paper and the cylinder are nipped with a clamp so that water may not leak, water is discarded after the contact time of 120 seconds, excessive water on the base paper is quickly removed with blotting paper, and the weight change of the base paper is weighed. In this way, the Cobb water absorption can be measured.

The paper weight of the cardboard base paper (liner paper) is preferably 100 g/m² or greater but 400 g/m² or less, and in terms of the aptitude for pasting by a corrugator, more preferably 150 g/m² or greater but 300 g/m² or less.

### <Ink applying step and ink applying unit>

The ink applying step is a step of applying an ink containing a coloring material and water, and is performed by the ink applying unit.

The method for applying an ink is not particularly limited. Examples of the method include, but are not limited to, an inkjet method, a blade coating method, a gravure coating method, a gravure offset coating method, a bar coating method, a roll coating method, a knife coating method, an air knife coating method, a comma coating method, a U-comma coating method, an AKKU coating method, a smoothing coating method, a microgravure coating method, a reverse roll coating method, a four-roll coating method, a five-roll coating method, a dip coating method, a curtain coating method, a slide coating method, and a die coating method. Among these methods, an inkjet method is suitably used.

The amount of an ink to be applied when producing a solid image is preferably 4 g/m² or greater but 14 g/m² or less and more preferably 7 g/m² or greater but 14 g/m² or less in terms of forming a high-quality image excellent in a solid fill property and suppressed in color bleeding.

When printing an ink in a small droplet, it is preferable to reduce the amount of an ink to be applied.

### <<Ink>>

An ink used in the present disclosure is an ink containing a coloring material and water, and may contain, for example, an organic solvent, a resin, and additives.

For example, the organic solvent, the water, the coloring material, the resin, and the additives used for the ink will be described below.

### -Organic solvent-

The organic solvent is not particularly limited and may be appropriately selected depending on the intended purpose. For example, the same organic solvent as contained in the processing fluid can be used. However, it is preferable that the ink contain one selected from 1,2-propanediol, 1,2-butanediol, and 2,3-butanediol, because the film forming property of the resin is improved and scratch resistance is further improved.

The proportion of the organic solvent in ink has no particular limit and can be suitably selected to suit a particular application. In terms of the drying property and discharging reliability of the ink, the proportion is preferably from 10 to 60 percent by mass and more preferably from 20 to 60 percent by mass.

### -Water-

The proportion of water in the ink has no particular limit and can be suitably selected to suit to a particular application. In terms of the drying property and discharging reliability of the ink, the proportion is preferably from 10 to 90 percent by mass and more preferably from 20 to 60 percent by mass.

### -Coloring Material-

The coloring material has no particular limit. For example, pigments and dyes are suitable.

The pigment includes inorganic pigments and organic pigments. These can be used alone or in combination. In addition, it is possible to use a mixed crystal.

As the pigments, for example, black pigments, yellow pigments, magenta pigments, cyan pigments, white pigments, green pigments, orange pigments, gloss pigments of gold, silver, etc., and metallic pigments can be used.

As the inorganic pigments, in addition to titanium oxide, iron oxide, calcium carbonate, barium sulfate, aluminum hydroxide, barium yellow, cadmium red, and chrome yellow, carbon black manufactured by known methods such as contact methods, furnace methods, and thermal methods can be used.

As the organic pigments, it is possible to use azo pigments, polycyclic pigments (phthalocyanine pigments, perylene pigments, perinone pigments, anthraquinone pigments, quinacridone pigments, dioxazine pigments, indigo pigments, thioindigo pigments, isoindolinone pigments, and quinophthalone pigments, etc.), dye chelates (basic dye type chelates, acid dye type chelates, etc.), nitro pigments, nitroso pigments, and aniline black. Of these pigments, pigments having good affinity with solvents are preferable. Also, hollow resin particles and inorganic hollow particles can be used.

Specific examples of the pigments for black include, but are not limited to, carbon black (C.I. Pigment Black 7) such as furnace black, lamp black, acetylene black, and channel black, metals such as copper, iron (C.I. Pigment Black 11), and titanium oxide, and organic pigments such as aniline black (C.I. Pigment Black 1).

Specific examples of the pigments for color include, but are not limited to, C.I. Pigment Yellow 1, 3, 12, 13, 14, 17, 24, 34, 35, 37, 42 (yellow iron oxide), 53, 55, 74, 81, 83, 95, 97, 98, 100, 101, 104, 108, 109, 110, 117, 120, 138, 150, 153, 155, 180, 185, and 213; C.I. Pigment Orange 5, 13, 16, 17, 36, 43, and 51; C.I. Pigment Red 1, 2, 3, 5, 17, 22, 23, 31, 38, 48:2, 48:2 (Permanent Red 2B(Ca)), 48:3, 48:4, 49:1, 52:2, 53:1, 57:1 (Brilliant Carmine 6B), 60:1, 63:1, 63:2, 64:1, 81, 83, 88, 101 (rouge), 104, 105, 106, 108 (Cadmium Red), 112, 114, 122 (Quinacridone Magenta), 123, 146, 149, 166, 168, 170, 172, 177, 178, 179, 184, 185, 190, 193, 202, 207, 208, 209, 213, 219, 224, 254, and 264; C.I. Pigment Violet 1 (Rhodamine Lake), 3, 5:1, 16, 19, 23, and 38; C.I. Pigment Blue 1, 2, 15 (Phthalocyanine Blue), 15:1, 15:2, 15:3, 15:4 (Phthalocyanine Blue), 16, 17:1, 56, 60, and 63; and C.I. Pigment Green 1, 4, 7, 8, 10, 17, 18, and 36.

The type of dye is not particularly limited and includes, for example, acidic dyes, direct dyes, reactive dyes, and basic dyes. These can be used alone or in combination.

Specific examples of the dye include, but are not limited to, C.I. Acid Yellow 17, 23, 42, 44, 79, and 142, C.I. Acid Red 52, 80, 82, 249, 254, and 289, C.I. Acid Blue 9, 45, and 249, C.I. Acid Black 1, 2, 24, and 94, C. I. Food Black 1 and 2, C.I. Direct Yellow 1, 12, 24, 33, 50, 55, 58, 86, 132, 142, 144, and 173, C.I. Direct Red 1, 4, 9, 80, 81, 225, and 227, C.I. Direct Blue 1, 2, 15, 71, 86, 87, 98, 165, 199, and 202, C.I. Direct Black 19, 38, 51, 71, 154, 168, 171, and 195, C.I. Reactive Red 14, 32, 55, 79, and 249, and C.I. Reactive Black 3, 4, and 35.

The proportion of the coloring material in ink is preferably from 0.1 to 15 percent by mass and more preferably from 1 to 10 percent by mass in terms of enhancement of image density, fixability, and discharging stability.

To obtain the ink, the pigment is dispersed by, for example, preparing a self-dispersible pigment by introducing a hydrophilic functional group into the pigment, coating the surface of the pigment with resin, or using a dispersant.

To prepare a self-dispersible pigment by introducing a hydrophilic functional group into a pigment, for example, it is possible to add a functional group such as sulfone group or carboxyl group to the pigment (e.g., carbon) to disperse the pigment in water.

To coat the surface of the pigment with resin, the pigment is encapsulated by microcapsules to make the pigment dispersible in water. This can be referred to as a resin-coated pigment. In this case, the pigment to be added to ink is not necessarily wholly coated with resin. Pigments partially or wholly uncovered with resin may be dispersed in the ink unless the pigments have an adverse impact.

To use a dispersant, for example, a known dispersant of a small molecular weight type or a high molecular weight type represented by a surfactant is used to disperse the pigments in ink.

As the dispersant, it is possible to use, for example, anionic surfactants, cationic surfactants, nonionic surfactants, amphoteric surfactants, etc. depending on the pigments.

Also, a nonionic surfactant (RT-100, manufactured by TAKEMOTO OIL & FAT CO., LTD.) and a formalin condensate of naphthalene sodium sulfonate are suitable as dispersants.

These dispersants can be used alone or in combination.

### -Pigment Dispersion-

The ink can be obtained by mixing a pigment with materials such as water and organic solvent. It is also possible to mix a pigment with water, a dispersant, etc., first to prepare a pigment dispersion and thereafter mix the pigment dispersion with materials such as water and organic solvent to manufacture ink.

The pigment dispersion is obtained by mixing and dispersing water, pigment, pigment dispersant, and other optional components and adjusting the particle size. It is good to use a dispersing device for dispersion.

The particle diameter of the pigment in the pigment dispersion has no particular limit. For example, the maximum frequency in the maximum number conversion is preferably from 20 to 500 nm and more preferably from 20 to 150 nm to improve dispersion stability of the pigment and ameliorate the discharging stability and image quality such as image density.

The particle diameter of the pigment can be measured using, for example, a particle size analyzer (Nanotrac Wave-UT151, manufactured by MicrotracBEL Corp).

In addition, the proportion of the pigment in the pigment dispersion is not particularly limited and can be suitably selected to suit a particular application. In terms of improving discharging stability and image density, the content is preferably from 0.1 to 50 percent by mass and more preferably from 0.1 to 30 percent by mass.

During the production, coarse particles are optionally filtered off from the pigment dispersion with a filter, a centrifuge, etc. preferably followed by degassing.

### -Resin-

The type of the resin contained in the ink has no particular limit and can be suitably selected to suit to a particular application. Specific examples thereof include, but are not limited to, urethane resins, polyester resins, acrylic-based resins, vinyl acetate-based resins, styrene-based resins, butadiene-based resins, styrene-butadiene-based resins, vinylchloride-based resins, acrylic styrene-based resins, and acrylic silicone-based resins.

Particles of such resins may be also used. It is possible to mix a resin emulsion in which the resin particles are dispersed in water serving as a dispersion medium with materials such as a coloring agent and an organic solvent to obtain ink. The resin particle can be synthesized or is available on the market. It is possible to synthesize the resin particle or obtain from market. These can be used alone or in combination of the resin particles.

The volume average particle diameter of the resin particle is not particularly limited and can be suitably selected to suit to a particular application. The volume average particle diameter is preferably from 10 to 1,000 nm, more preferably from 10 to 200 nm, and furthermore preferably from 10 to 100 nm to obtain good fixability and image hardness.

The volume average particle diameter can be measured by using a particle size analyzer (Nanotrac Wave-UT151, manufactured by MicrotracBEL Corp.).

The proportion of the resin is not particularly limited and can be suitably selected to suit to a particular application. In terms of fixability and storage stability of ink, it is preferably from 1 to 30 percent by mass and more preferably from 5 to 20 percent by mass to the total content of the ink.

The particle diameter of the solid portion in ink has no particular limit and can be suitably selected to suit to a particular application. For example, the maximum frequency in the maximum number conversion is preferably from 20 to 1,000 nm and more preferably from 20 to 150 nm to ameliorate the discharging stability and image quality such as image density. The solid portion includes resin particles, particles of pigments, etc. The particle diameter of the solid portion can be measured by using a particle size analyzer (Nanotrac Wave-UT151, manufactured by MicrotracBEL Corp).

### -Additive-

Ink may further optionally contain a surfactant, a defoaming agent, a preservative and fungicide, a corrosion inhibitor, a pH regulator, etc.

### --Surfactant--

The surfactant is not particularly limited and may be appropriately selected depending on the intended purpose. For example, the same surfactant as contained in the processing fluid can be used.

### --Defoaming agent--

The defoaming agent is not particularly limited and may be appropriately selected depending on the intended purpose. For example, the same defoaming agent as contained in the processing fluid can be used.

### --Preservative and fungicide--

The preservative and the fungicide are not particularly limited and may be appropriately selected depending on the intended purpose. For example, the same preservative and fungicide as contained in the processing fluid can be used.

### --Corrosion inhibitor--

The corrosion inhibitor is not particularly limited and may be appropriately selected depending on the intended purpose. For example, the same corrosion inhibitor as contained in the processing fluid can be used.

### --pH regulator--

The pH regulator is not particularly limited and may be appropriately selected depending on the intended purpose. For example, the same pH regulator as contained in the processing fluid can be used.

It is possible to prepare the ink by dispersing or dissolving the components described above in, for example, water serving as a solvent, and further stirring and mixing the resultant as needed.

For the stirring and mixing, for example, a stirrer using an ordinary stirring blade, a magnetic stirrer, and a high-speed disperser can be used.

The property of the ink is not particularly limited and can be suitably selected to suit to a particular application. For example, viscosity, surface tension, pH, etc., are preferably in the following ranges.

The viscosity of the ink at 25 degrees C is preferably from 5 to 30 mPa·s and more preferably from 5 to 25 mPa·s to improve print density and text quality and obtain good dischargeability. The viscosity can be measured by, for example, a rotatory viscometer (RE-80L, manufactured by TOKI SANGYO CO., LTD.). The measuring conditions are as follows:
- Standard cone rotor (1°34' x R24)
- Sample liquid amount: 1.2 mL
- Number of rotations: 50 rotations per minute (rpm)
- 25 degrees C
- Measuring time: three minutes

The surface tension of the ink is preferably 35 mN/m or less and more preferably 32 mN/m or less at 25 degrees C in terms that the ink is suitably levelized on a print medium and the drying time of the ink is shortened. The pH of the ink is preferably from 7 to 12 and more preferably from 8 to 11 in terms of prevention of corrosion of metal materials contacting the ink.

### <Drying step and drying unit>

The drying step is a step of drying a print medium to which the processing fluid and the ink are applied, and is performed by the drying unit.

In the present disclosure, the processing fluid is applied to a print medium by the applying method described above, and the ink is then applied to the print medium to record an image. After the processing fluid is applied to the print medium, the ink may be applied before the processing fluid applied is dried, or the ink may be applied after the processing fluid applied is dried.

Drying of the processing fluid and the ink is a step of heating and drying a print medium (cardboard base paper) by a known method such as a roll heater, a drum heater, a hot air drier, an infrared drier, and an ultraviolet drier. It is preferable to impart a surface temperature of 60 degrees C or higher, or preferably 60 degrees C or higher but 100 degrees C or lower to the print medium. The drying time is preferably one second or longer but shorter than 300 seconds.

### (Printed matter)

A printed matter of the present disclosure includes a print medium having a Cobb water absorption, stipulated by JIS-P8140, of 20 g/m² or greater but 75 g/m² or less when contacted with water for 120 seconds, and a processing fluid layer and an ink layer over the print medium, where the processing fluid layer contains silica and a multivalent metal salt, and the ink layer contains a coloring material. Cardboard base paper can be suitably used as the print medium.

The printed matter includes a print medium and an image formed on the print medium with the ink used in the present disclosure.

A printing apparatus and a printing method of the present disclosure are used to print the image on the print medium to obtain the printed matter.

The printing apparatus needs not be a dedicated apparatus for cardboard printing, and an inkjet printing apparatus can be used.

### <Printing Apparatus and Printing Method>

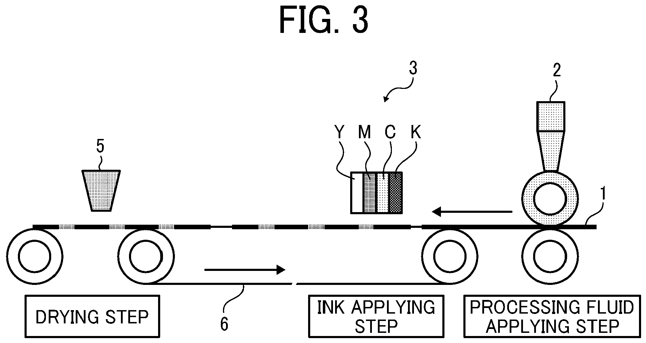

FIG. 3 is a schematic view illustrating an example of a printing apparatus and a printing method. The printing apparatus of FIG. 3 includes a processing fluid applying device 2 configured to apply a processing fluid, an ink discharging head 3 configured to discharge a black ink (K), a cyan ink (C), a magenta ink (M), and a yellow ink (Y), a drying device 5, and a conveyor belt 6 configured to convey a print medium 1.

The printing apparatus and the printing method may further optionally include a heater for use in the heating process and a drier for use in the drying process. For example, the heating device and the drying device heat and dry the top surface and the bottom surface of a print medium having an image. The heating device and the drying device are not particularly limited. For example, a fan heater and an infra-red heater can be used. The print medium can be heated and dried before, during, and after printing.

In addition, the printing apparatus and the printing method are not limited to those producing merely meaningful visible images such as texts and figures with the ink. For example, the printing apparatus and the printing method can produce patterns like geometric design and 3D images.

In addition, the printing apparatus includes both a serial type apparatus in which the liquid discharging head is caused to move and a line type apparatus in which the liquid discharging head is not moved, unless otherwise specified.

Furthermore, in addition to the desktop type, this printing apparatus includes a wide type capable of printing images on a large print medium such as A0, and a continuous printer capable of using continuous paper wound up in a roll form as print media.

Moreover, image forming, recording, printing, etc. in the present disclosure represent the same meaning.

Recording media, media, and print media represent the same meaning.

### Examples

The present disclosure will be described below by way of Examples. The present disclosure should not be construed as being limited to these Examples. Unless otherwise particularly specified, for example, preparations and evaluations in Examples and Comparative Examples were performed at 25 degrees C at a relative humidity of 60%.

### (Pigment dispersion preparation example 1)

### -Production of magenta pigment dispersion 1-

After the mixture of the prescription described below was pre-mixed, the resultant was subjected to circulation dispersion treatment for 7 hours with a disk-type bead mill (obtained from Shinmaru Enterprises Corporation, KDL type, using zirconia balls having a diameter of 0.3 mm as media), to obtain a magenta pigment dispersion 1 (with a pigment concentration of 15% by mass).

### [Prescription of magenta pigment dispersion 1]

- C.I. Pigment Red 269 (obtained from Clariant Japan K.K.): 15 parts by mass
- Acrylic-based polymeric dispersant (DISPERBYK-2010, obtained from BYK Japan K.K.): 5 parts by mass
- Ion-exchanged water: 80 parts by mass

### (Ink production example 1)

### -Production of magenta ink 1-

After the mixture of the prescription described below was pre-mixed, the resultant was stirred with a dissolver (DISPERMAT LC30, obtained from Eko Instruments Co., Ltd.) at 2,000 rpm for 10 minutes and subsequently filtrated through a polypropylene filter having an average pore diameter of 0.8 micrometers, to obtain a magenta ink 1.

### [Prescription of magenta ink 1]

- Magenta pigment dispersion 1 described above: 20 parts by mass
- TEGO (registered trademark) WET 270 (a silicone-based surfactant, obtained from Evonik Industries AG): 1 part by mass
- PROXEL LV (a preservative and a fungicide, obtained from Avecia Inc.): 0.1 parts by mass
- 1,2-Propanediol : 25 parts by mass
- Propylene glycol monomethyl ether acetate: 5 parts by mass
- Ion-exchanged water: 48.9 parts by mass

### (Silica dispersion preparation example 1)

### -Production of silica dispersion 1-

After the mixture of the prescription described below was pre-mixed, the resultant was stirred with a homogenizer (T25 DIGITAL ULTRA-TURRAX, obtained from IKA Japan K.K.) at 10,000 rpm for 20 minutes, to obtain a silica dispersion 1 (with a silica concentration of 10% by mass).

### [Prescription of silica dispersion 1]

- AEROSIL 50 (hydrophilic silica, with a specific surface area of 50±15 m²/g, obtained from Nippon Aerosil Co., Ltd.): 10 parts by mass
- Ion-exchanged water: 90 parts by mass

### (Silica dispersion preparation examples 2 to 4)

### -Production of silica dispersions 2 to 4-

Silica dispersions 2 to 4 (with a silica concentration of 10% by mass) were prepared in the same manner as in Silica dispersion preparation example 1, except that unlike in Silica dispersion preparation example 1, the prescription was changed to as described in Table 1.

**Table 1**

| | Silica dispersion 1 | Silica dispersion 2 | Silica dispersion 3 | Silica dispersion 4 |
|---|---|---|---|---|
| AEROSIL 50 | 10 | | | |
| AEROSIL 130 | | 10 | | |
| AEROSIL 300 | | | 10 | |
| AEROSIL R972 | | | | 10 |
| Ion-exchanged water | 90 | 90 | 90 | |
| 1,2-Propanediol | | | | 90 |
| Total (part by mass) | 100 | 100 | 100 | 100 |

The details of the components in Table 1 are as follows.
- AEROSIL 50 (hydrophilic silica, with a BET specific surface area of 50 m²/g and a number average primary particle diameter of about 30 nm, obtained from Nippon Aerosil Co., Ltd.)
- AEROSIL 130 (hydrophilic silica, with a BET specific surface area of 130 m²/g and a number average primary particle diameter of about 16 nm, obtained from Nippon Aerosil Co., Ltd.)
- AEROSIL 300 (hydrophilic silica, with a BET specific surface area of 300 m²/g and a number average primary particle diameter of about 7 nm, obtained from Nippon Aerosil Co, Ltd.)
- AEROSIL R972 (hydrophobic silica, with a BET specific surface area of 110 m²/g and a number average primary particle diameter of about 16 nm, obtained from Nippon Aerosil Co., Ltd.)

The BET specific surface areas of silica can be measured with the Brunauer, Emmett, and Teller method (BET method), and were values measured by a typical gas adsorption method.

### (Processing fluid preparation example 1)

### -Production of processing fluid 1-

After the mixture of the prescription described below was pre-mixed, the resultant was stirred with a dissolver (DISPERMAT LC30, obtained from Eko Instruments Co., Ltd.) at 2,000 rpm for 10 minutes, to obtain a processing fluid 1.

### [Prescription of processing fluid 1]

- 1,2-Propanediol: 10.0 parts by mass
- 3-Methoxybutanol: 10.0 parts by mass
- TEGO (registered trademark) WET 270 (a silicone-based surfactant, obtained from Evonik Industries AG): 0.5 parts by mass
- PROXEL LV (obtained from Avecia Inc., a preservative and a fungicide): 0.1 parts by mass
- Silica dispersion 1 described above: 10.0 parts by mass
- Calcium acetate monohydrate: 6.0 parts by mass
- Ion-exchanged water: 63.4 parts by mass

### (Processing fluid preparation examples 2 to 16)

### -Production of processing fluids 2 to 16-

Processing fluids 2 to 16 were prepared in the same manner as in Processing fluid preparation example 1, except that unlike in Processing fluid preparation example 1, the prescription was changed to as described in Table 2 to Table 4.

The viscosity of each obtained processing fluid at 25 degrees C was measured in the manner described below. The results are presented in Table 2 to Table 4.

### <Viscosity measurement>

The viscosity of each processing fluid was measured at 25 degrees C with a standard cone rotor (1°34'×R24) with a sample liquid amount of 1.2 mL at a number of rotations of 50 rpm for three minutes.

**Table 2**

| | | Processing fluid No. | | | | | |
|---|---|---|---|---|---|---|---|
| | | 1 | 2 | 3 | 4 | 5 | 6 |
| Organic solvent | 1,2-Propanediol | 10.0 | 10.0 | 10.0 | 1.0 | 10.0 | 10.0 |
| | 3 -Methoxybutanol | 10.0 | 10.0 | 10.0 | 10.0 | 10.0 | 10.0 |
| Surfactant | TEGO WET 270 | 0.5 | 0.5 | 0.5 | 0.5 | 0.5 | 0.5 |
| Preservative/ fungicide | PROXEL LV | 0.1 | 0.1 | 0.1 | 0.1 | 0.1 | 0.1 |
| Silica dispersion | Silica dispersion 1 | 10.0 | | | | 60.0 | 3.0 |
| | Silica dispersion 2 | | 10.0 | | | | |
| | Silica dispersion 3 | | | 10.0 | | | |
| | Silica dispersion 4 | | | | 10.0 | | |
| Multivalent metal salt | Calcium acetate monohydrate | 6.0 | 6.0 | 6.0 | 6.0 | 6.0 | 6.0 |
| | Magnesium acetate tetrahydrate | | | | | | |
| Resin | HYROS-X·M-141 | | | | | | |
| Water | Ion-exchanged water | 63.4 | 63.4 | 63.4 | 72.4 | 13.4 | 70.4 |
| Total (% by mass) | | 100.0 | 100.0 | 100.0 | 100.0 | 100.0 | 100.0 |
| Silica concentration in processing fluid (% by mass) | | 1.0 | 1.0 | 1.0 | 1.0 | 6.0 | 0.3 |
| Metal salt concentration in processing fluid (% by mass) | | 6.0 | 6.0 | 6.0 | 6.0 | 6.0 | 6.0 |
| Resin concentration in processing fluid (% by mass) | | 0.0 | 0.0 | 0.0 | 0.0 | 0.0 | 0.0 |
| Viscosity at 25 degrees C (mPa·s) | | 11.0 | 12.1 | 13.3 | 12.5 | 192.4 | 5.8 |

**Table 3**

| | | Processing fluid No. | | | | | |
|---|---|---|---|---|---|---|---|
| | | 7 | 8 | 9 | 10 | 11 | 12 |
| Organic solvent | 1,2-Propanediol | 10.0 | 10.0 | 10.0 | 10.0 | 10.0 | 10.0 |
| | 3 -Methoxybutanol | 10.0 | 10.0 | 10.0 | 10.0 | 10.0 | 10.0 |
| Surfactant | TEGO WET 270 | 0.5 | 0.5 | 0.5 | 0.5 | 0.5 | 0.5 |
| Preservative/ fungicide | PROXEL LV | 0.1 | 0.1 | 0.1 | 0.1 | 0.1 | 0.1 |
| Silica dispersion | Silica dispersion 1 | 10.0 | 10.0 | 10.0 | 10.0 | 10.0 | 10.0 |
| | Silica dispersion 2 | | | | | | |
| | Silica dispersion 3 | | | | | | |
| | Silica dispersion 4 | | | | | | |
| Multivalent metal salt | Calcium acetate monohydrate | 2.0 | 12.0 | 6.0 | | | |
| | Magnesium acetate tetrahydrate | | | | 12.0 | 1.0 | 25.0 |
| Resin | HYROS-X·M-141 | | | 10.0 | | | |
| Water | Ion-exchanged water | 67.4 | 57.4 | 53.4 | 57.4 | 68.4 | 44.4 |
| Total (% by mass) | | 100.0 | 100.0 | 100.0 | 100.0 | 100.0 | 100.0 |
| Silica concentration in processing fluid (% by mass) | | 1.0 | 1.0 | 1.0 | 1.0 | 1.0 | 1.0 |
| Metal salt concentration in processing fluid (% by mass) | | 2.0 | 12.0 | 6.0 | 12.0 | 1.0 | 25.0 |
| Resin concentration in processing fluid (% by mass) | | 0.0 | 0.0 | 4.5 | 0.0 | 0.0 | 0.0 |
| Viscosity at 25 degrees C (mPa·s) | | 10.2 | 12.6 | 13.7 | 12.0 | 10.0 | 14.2 |

**Table 4**

| | | Processing fluid No. | | | |
|---|---|---|---|---|---|
| | | 13 | 14 | 15 | 16 |
| Organic solvent | 1,2-Propanediol | 10.0 | 10.0 | 10.0 | 10.0 |
| | 3 -Methoxybutanol | 10.0 | 10.0 | 10.0 | 10.0 |
| Surfactant | TEGO WET 270 | 0.5 | 0.5 | 0.5 | 0.5 |
| Preservative/ fungicide | PROXEL LV | 0.1 | 0.1 | 0.1 | 0.1 |
| Silica dispersion | Silica dispersion 1 | 40.0 | 4.0 | | 10.0 |
| | Silica dispersion 2 | | | | |
| | Silica dispersion 3 | | | | |
| | Silica dispersion 4 | | | | |
| Multivalent metal salt | Calcium acetate monohydrate | 6.0 | 6.0 | 6.0 | |
| | Magnesium acetate tetrahydrate | | | | |
| Resin | HYROS-X·M-141 | | | | |
| Water | Ion-exchanged water | 33.4 | 69.4 | 73.4 | 69.4 |
| Total (% by mass) | | 100.0 | 100.0 | 100.0 | 100.0 |
| Silica concentration in processing fluid (% by mass) | | 4.0 | 0.4 | 0.0 | 1.0 |
| Metal salt concentration in processing fluid (% by mass) | | 6.0 | 6.0 | 6.0 | 0.0 |
| Resin concentration in processing fluid (% by mass) | | 0.0 | 0.0 | 0.0 | 0.0 |
| Viscosity at 25 degrees C (mPa·s) | | 59.8 | 6.3 | 5.2 | 10.5 |

The details of the components in Table 2 to Table 4 are as follows.
- HYROS-X·M-141 (an acrylic resin emulsion, with a solid concentration of 45% by mass and an acid value of 19 mgKOH/g, obtained from Seiko PMC Corporation)
- TEGO (registered trademark) WET 270 (a silicone-based surfactant, obtained from Evonik Industries AG)

### <Application of processing fluid>

According to each combination of a print medium and a processing fluid presented in Table 5 to Table 8, the processing fluid was applied over the print medium using a bar coater. After the processing fluid was applied, the resultant was dried in a drier set to 80 degrees C for 2 minutes. The amount (g/m²) of the processing fluid applied and the amount (g/m²) of silica attached measured after drying are presented in Table 5 to Table 8.

Next, the appearance changes of each print medium after application of the processing fluid were evaluated in the manner described below. The results are presented in Table 5 to Table 8.

### <Evaluation of appearance changes of print media>

The degree of appearance changes of the print medium of each combination presented in Table 5 to Table 8 after application of the processing fluid and drying was visually observed and evaluated according to the criteria described below. C and B are practically usable levels.

### [Evaluation criteria]

B: There were almost no appearance changes from before application
C: Slight clouding and whitening from before application were observed.
D: Considerable clouding and whitening from before application were observed.

### (Examples 1 to 16 and Comparative Examples 1 to 4)

### <Image recording step>

According to each combination described in Table 5 to Table 8, an inkjet printer (obtained from Ricoh Company, Ltd., IPSIO GXE 5500) was filled with the magenta ink 1, and a solid image was formed at 1,200 dpi over the print medium to which the processing fluid was applied.

### <Print media>

The details of the print media are as follows.
- Print medium A: NPK LINER TF (with a paper weight of 170 g/m², cardboard base paper, with a Cobb water absorption of 55 g/m², obtained from Nippon Paper Industries Co., Ltd.)
- Print medium B: TPK-F (with a paper weight of 170 g/m², cardboard base paper, with a Cobb water absorption of 23 g/m², obtained from Shin Tokai Paper Co., Ltd.)
- Print medium C: NCNF LINER (with a paper weight of 160 g/m², cardboard base paper, with a Cobb water absorption of 69 g/m², obtained from Nippon Paper Industries Co., Ltd.)

The Cobb water absorption was a value measured for a water contact time of 120 seconds as speculated by JIS-P8140.

Next, "optical density (magenta density)" and "bleed (color bleed)" were evaluated in the manners described below. The results are presented in Table 5 to Table 8.

### <Evaluation of optical density (magenta density)>

Ten sheets of recopy PPC paper TYPE 6200 (obtained from Ricoh Company, Ltd.) were underlaid below the print medium of each combination described in Table 5 to Table 8 as the background for colorimetry, and the optical density (magenta density) was measured at arbitrary five positions within the printed image. The average of the five positions was evaluated according to the criteria described below. C, B, and A are practically usable levels.

### [Evaluation criteria]

A: The optical density (magenta density) was 1.5 or higher.
B: The optical density (magenta density) was 1.25 or higher but lower than 1.5.
C: The optical density (magenta density) was 1.0 or higher but lower than 1.25.
D: The optical density (magenta density) was less than 1.0.

### <Evaluation of bleed (color bleed)>

An end portion of the solid image formed was visually observed, to measure an exuding distance by which the image portion exuded to the non-printed portion of the print medium of each combination described in Table 5 to Table 8 and evaluate the exuding distance according to the criteria described below. C, B, and A are practically usable levels.

### [Evaluation criteria]

A: Almost no bleed was observed.
B: Bleed of an exuding distance of less than 1 mm was observed.
C: Bleed of an exuding distance of 1 mm or greater but less than 2 mm was observed.
D: Bleed of an exuding distance of 2 mm or greater was observed.

**Table 5**

| | | Ex. | | | | | |
|---|---|---|---|---|---|---|---|
| | | 1 | 2 | 3 | 4 | 5 | 6 |
| Processing fluid No. | | Processing fluid 1 | Processing fluid 2 | Processing fluid 3 | Processing fluid 4 | Processing fluid 5 | Processing fluid 6 |
| Print medium | | A | A | A | A | A | A |
| Application of processing fluid | Amount of processing fluid applied [g/m²] | 10.0 | 10.0 | 10.0 | 10.0 | 10.0 | 10.0 |
| | Amount of silica attached, measured after drying [g/m²] | 0.10 | 0.10 | 0.10 | 0.10 | 0.60 | 0.03 |
| Appearance changes after application of processing fluid | | B | B | B | B | C | B |
| Image quality | Magenta density | B | B | C | B | A | C |
| | Bleed | B | B | B | C | A | C |

**Table 6**

| | | Ex. | | | | | |
|---|---|---|---|---|---|---|---|
| | | 7 | 8 | 9 | 10 | 11 | 12 |
| Processing fluid No. | | Processing fluid 7 | Processing fluid 8 | Processing fluid 9 | Processing fluid 1 | Processing fluid 10 | Processing fluid 11 |
| Print medium | | A | A | A | B | A | A |
| Application of processing fluid | Amount of processing fluid applied [g/m²] | 10.0 | 10.0 | 10.0 | 10.0 | 10.0 | 20.0 |
| | Amount of silica attached, measured after drying [g/m²] | 0.10 | 0.10 | 0.10 | 0.10 | 0.10 | 0.20 |
| Appearance changes after application of processing fluid | | B | C | B | B | B | B |
| Image quality | Magenta density | C | A | A | B | A | C |
| | Bleed | C | A | B | B | A | C |

**Table 7**

| | | Ex. | | | |
|---|---|---|---|---|---|
| | | 13 | 14 | 15 | 16 |
| Processing fluid No. | | Processing fluid 12 | Processing fluid 13 | Processing fluid 14 | Processing fluid 1 |
| Print medium | | A | A | A | C |
| Application of processing fluid | Amount of processing fluid applied [g/m²] | 5.0 | 20.0 | 5.0 | 10.0 |
| | Amount of silica attached, measured after drying [g/m²] | 0.05 | 0.8 | 0.02 | 0.10 |
| Appearance changes after application of processing fluid | | C | C | B | B |
| Image quality | Magenta density | A | A | C | B |
| | Bleed | A | A | C | C |

**Table 8**

| | | Comp. Ex. | | | |
|---|---|---|---|---|---|
| | | 1 | 2 | 3 | 4 |
| Processing fluid No. | | Processing fluid 15 | Processing fluid 16 | Processing fluid 15 | No processing fluid |
| Print medium | | A | A | B | A |
| Application of processing fluid | Amount of processing fluid applied [g/m²] | 10.0 | 10.0 | 10.0 | 0.0 |
| | Amount of silica attached, measured after drying [g/m²] | 0.00 | 0.10 | 0.00 | 0.00 |
| Appearance changes after application of processing fluid | | B | B | B | B |
| Image quality | Magenta density | D | C | D | D |
| | Bleed | D | D | D | D |

From the results of Table 5 to Table 8, it was found that Examples 1 to 16 achieved a higher optical density (magenta density) and a greater bleed (color bleed) resistance than Comparative Examples 1 to 4.

It was also found from Comparative Example 4 that the magenta density degradation and bleed were significant unless the processing fluid was applied.

Aspects and embodiments of the present disclosure are, for example, as follows.
<1> A printing method including:
   applying a processing fluid containing silica and a multivalent metal salt to a print medium; and
   applying an ink containing a coloring material and water to the print medium,
   wherein the print medium has a Cobb water absorption of 20 g/m² or greater but 75 g/m² or less when contacted with water for 120 seconds, where the Cobb water absorption is stipulated by JIS-P8140.
<2> The printing method according to <1>,
   wherein the print medium is cardboard base paper.
<3> The printing method according to <1> or <2>,
   wherein in the applying the processing fluid, an amount of the silica attached on the print medium is 0.02 g/m² or greater but 0.8 g/m² or less.
<4> The printing method according to any one of <1> to <3>,
   wherein a BET specific surface area of the silica is 30 m²/g or greater but 350 m²/g or less.
<5> The printing method according to <4>,
   wherein the BET specific surface area of the silica is 35 m²/g or greater but 155 m²/g or less.
<6> The printing method according to any one of <1> to <5>,
   wherein a proportion of the multivalent metal salt in the processing fluid is 1% by mass or greater but 25% by mass or less.
<7> The printing method according to any one of <1> to <6>,
   wherein a proportion of the silica in the processing fluid is 0.3% by mass or greater but 6% by mass or less.
<8> The printing method according to any one of <1> to <7>,
   wherein the silica is hydrophilic silica.
<9> The printing method according to any one of <1> to <8>,
   wherein the processing fluid further contains a resin having an acid value of 20 mgKOH/g or less, and
   a proportion of the resin in the processing fluid is 0.5% by mass or greater but 20% by mass or less.
<10> The printing method according to any one of <1> to <9>, further including
   drying the print medium to which the processing fluid and the ink are applied.
<11> The printing method according to any one of <1> to <10>,
   wherein in the applying the ink, the ink is applied by an inkjet method.
<12> A printing apparatus including:
   a processing fluid applying unit configured to apply a processing fluid containing silica and a multivalent metal salt to a print medium; and
   an ink applying unit configured to apply an ink containing a coloring material and water to the print medium,
   wherein the print medium has a Cobb water absorption of 20 g/m² or greater but 75 g/m² or less when contacted with water for 120 seconds, where the Cobb water absorption is stipulated by JIS-P8140.
<13> The printing apparatus according to <12>, further including
   a drying unit configured to dry the print medium to which the processing fluid and the ink are applied.
<14> A printed matter including:
   a print medium having a Cobb water absorption of 20 g/m² or greater but 75 g/m² or less when contacted with water for 120 seconds, where the Cobb water absorption is stipulated by JIS-P8140;
   a layer containing silica and a multivalent metal salt; and
   a layer containing a coloring material.

The printing method according to any one of <1> to <11>, the printing apparatus according to <12> or <13>, and the printed matter according to <14> can solve the various problems in the related art and achieve the object of the present disclosure.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

## Claims

1. A printing method comprising:
applying a processing fluid comprising silica and a multivalent metal salt to a print medium (1); and
applying an ink comprising a coloring material and water to the print medium (1),
wherein the print medium (1) has a Cobb water absorption of 20 g/m² or greater but 75 g/m² or less when contacted with water for 120 seconds, where the Cobb water absorption is stipulated by JIS-P8140.

2. The printing method according to claim 1,
wherein the print medium (1) is cardboard base paper (10).

3. The printing method according to claim 1 or 2,
wherein in the applying the processing fluid, an amount of the silica attached on the print medium is 0.02 g/m² or greater but 0.8 g/m² or less.

4. The printing method according to any one of claims 1 to 3,
wherein a BET specific surface area of the silica is 30 m²/g or greater but 350 m²/g or less.

5. The printing method according to claim 4,
wherein the BET specific surface area of the silica is 35 m²/g or greater but 155 m²/g or less.

6. The printing method according to any one of claims 1 to 5,
wherein a proportion of the multivalent metal salt in the processing fluid is 1% by mass or greater but 25% by mass or less.

7. The printing method according to any one of claims 1 to 6,
wherein a proportion of the silica in the processing fluid is 0.3% by mass or greater but 6% by mass or less.

8. The printing method according to any one of claims 1 to 7,
wherein the silica is hydrophilic silica.

9. The printing method according to any one of claims 1 to 8,
wherein the processing fluid further comprises a resin having an acid value of 20 mgKOH/g or less, and
a proportion of the resin in the processing fluid is 0.5% by mass or greater but 20% by mass or less.

10. The printing method according to any one of claims 1 to 9, further comprising
drying the print medium (1) to which the processing fluid and the ink are applied.

11. The printing method according to any one of claims 1 to 10, wherein in the applying the ink, the ink is applied by an inkjet method.

12. A printing apparatus comprising:
a print medium (1) having a Cobb water absorption of 20 g/m² or greater but 75 g/m² or less when contacted with water for 120 seconds, where the Cobb water absorption is stipulated by JIS-P8140;
a processing fluid applying unit (2) configured to apply a processing fluid comprising silica and a multivalent metal salt to the print medium (1); and
an ink applying unit (3) configured to apply an ink comprising a coloring material and water to the print medium (1).

13. The printing apparatus according to claim 12, further comprising
a drying unit (5) configured to dry the print medium (1) to which the processing fluid and the ink are applied.

14. A printed matter comprising:
a print medium (1) having a Cobb water absorption of 20 g/m² or greater but 75 g/m² or less when contacted with water for 120 seconds, where the Cobb water absorption is stipulated by JIS-P8140;
a layer comprising silica and a multivalent metal salt; and
a layer comprising a coloring material.
